# EUROPEAN PATENT APPLICATION

(11) **EP 3 907 671 A2**
(43) Date of publication of application: **10.11.2021**
(21) Application number: 21197796.2
(22) Date of filing: 20.09.2021
(51) Int. Cl.: G06N 20/00

(54) **METHOD AND APPARATUS FOR INCREMENTALLY TRAINING MODEL**

(30) Priority: 09.03.2021 CN 202110258520
(71) Applicant: Beijing Baidu Netcom Science And Technology Co., Ltd., Beijing 100085 (CN)
(72) Inventor: LIU, Chenhui, Beijing, 100085 (CN); ZHONG, Huiqiang, Beijing, 100085 (CN); HUANG, Qiang, Beijing, 100085 (CN); XU, Siqi, Beijing, 100085 (CN); ZHOU, Houqian, Beijing, 100085 (CN)
(74) Representative: Maiwald Patent- und Rechtsanwaltsgesellschaft mbH

(57) **Abstract**

A method for incrementally training a model is provided. The method includes: obtaining a first soft tag of each raw sample in a raw sample set based on a basic target model trained using the raw sample set; selecting a plurality of raw samples from the raw sample set as first samples based on the first soft tag of each raw sample; obtaining second samples and a second soft tag of each second sample; determining the first samples, the respective first soft tags, the second samples and the respective second soft tags as training samples; and generating a final target model by inputting the training samples into the basic target model for model training.

## Description

### TECHNICAL FIELD

The disclosure relates to a field of artificial intelligence technology and further relates to a field of big data technology.

### BACKGROUND

In the related art, main approaches to achieve incremental learning of models include data set expansion, parameter fine-tuning, representative sample-based methods and adversarial generation network-based methods. However, the methods in the related art cannot achieve a good balance between plasticity and stability of the model, and iterative update efficiency of the model is low.

### SUMMARY

The embodiments of the disclosure provide a method for incrementally training a model, an apparatus for incrementally training a model, an electronic device, a storage medium and a computer program product.

Embodiments of the disclosure in a first aspect provide a method for incrementally training a model. The method includes: obtaining a first soft tag of each raw sample in a raw sample set based on a basic target model trained using the raw sample set; selecting a plurality of raw samples from the raw sample set as first samples based on the first soft tag of each raw sample; obtaining second samples and a second soft tag of each second sample; determining training samples based on the first samples, the respective first soft tags, the second samples and the respective second soft tags; and generating a final target model by inputting the training samples into the basic target model for model training.

In some embodiments, selecting the plurality of raw samples from the raw sample set as the first samples based on the first soft tag of each raw sample, comprises: for each category, classifying raw samples in the raw sample set into a plurality of sample groups for the category based on a recognition probability of the category carried by the first soft tag; selecting a plurality of raw samples from each sample group for the category as chosen raw samples for the category; and determining the chosen raw samples for each category as the first samples.

In some embodiments, determining the chosen raw samples for each category as the first samples comprises: performing de-duplicating on the chosen raw samples in response to the chosen raw samples having duplicated raw samples; and determining remaining raw samples in the chosen raw samples after the de-duplicating as the first samples.

In some embodiments, the method further comprises: obtaining a sample group to which a de-duplicated raw sample belongs; selecting a different raw sample from the sample group as a replacement raw sample; and supplementing the first samples with the replacement raw sample.

In some embodiments, the method further comprises obtaining a number of the second samples; and wherein selecting the plurality of raw samples from the raw sample set as the first samples based on the first soft tag of each raw sample comprises: selecting the plurality of raw samples from the raw sample set as the first samples based on the first soft tag of each raw sample and the number.

In some embodiments, the method further comprises obtaining a hard tag of each second sample; and wherein obtaining the second soft tag of each second sample comprises: converting the hard tag of each second sample to the second soft tag.

Embodiments of the disclosure in a second aspect provide an apparatus for incrementally training a model according to an embodiment of the disclosure. The apparatus includes: a first obtaining module, a selecting module, a second obtaining module, a determining module and a training module. The first obtaining module is configured to obtain a first soft tag of each raw sample in a raw sample set based on a basic target model trained using the raw sample set. The selecting module is configured to select a plurality of raw samples from the raw sample set as first samples based on the first soft tag of each raw sample. The second obtaining module is configured to obtain second samples and a second soft tag of each second sample. The determining module is configured to determine training samples based on the first samples, the respective first soft tags, the second samples and the respective second soft tags. The training module is configured to generate a final target model by inputting the training samples into the basic target model for model training.

In some embodiments, the selecting module is further configured to: for each category, classify raw samples in the raw sample set into a plurality of sample groups for the category based on a recognition probability of the category carried by the first soft tag; select a plurality of raw samples from each sample group for the category as chosen raw samples for the category; and determine the chosen raw samples for each category as the first samples.

In some embodiments, the selecting module is further configured to: perform de-duplicating on the chosen raw samples in response to the chosen raw samples having duplicated raw samples; and determine remaining raw samples in the chosen raw samples after the de-duplicating as the first samples.

In some embodiments, the selecting module is further configured to: obtain a sample group to which a de-duplicated raw sample belongs; select a different raw sample from the sample group as a replacement raw sample; and supplement the first samples with the replacement raw sample.

In some embodiments, the selecting module is further configured to: obtain a number of the second samples; and select the first samples from the raw sample set based on the number.

In some embodiments, the second obtaining module is further configured to: obtain a hard tag of each second sample; and convert the hard tag to the second soft tag.

Embodiments of the disclosure in a third aspect provide an electronic device. The electronic device includes: a memory and a processor. The memory stores instructions executable by the at least one processor, and when the instructions are executed by the at least one processor, the method for incrementally training the model according to the embodiments of the first aspect of the disclosure is implemented.

Embodiments of the disclosure in a fourth aspect provide a non-transitory computer-readable storage medium having computer instructions stored thereon, and the computer instructions are used to implement a method for incrementally training a model according to the embodiments of the first aspect of the disclosure.

Embodiments of the disclosure in a fifth aspect provide a computer program product including computer programs, when the computer programs are executed by the processor, the method for incrementally training the model according to the embodiments of the first aspect of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a method for incrementally training a model according to an embodiment of the disclosure.
FIG. 2 is a flowchart of a method for selecting a first sample according to an embodiment of the disclosure.
FIG. 3 is a flowchart of a method for performing de-duplicating on chosen samples according to an embodiment of the disclosure.
FIG. 4 is a flowchart of a method for incrementally training a model according to an embodiment of the disclosure.
FIG. 5 is a block diagram of an apparatus for incrementally training a model according to an embodiment of the disclosure.
FIG. 6 is a structural diagram of an electronic device according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

Image processing is a technique that uses a computer to analyze an image to achieve a desired result, which generally refers to digital image processing. A digital image is a large two-dimensional array obtained by shooting with industrial cameras, video cameras and scanners. Elements of the array are called pixels and values of the pixels are called gray values. Image processing techniques generally include: a) image compression, b) enhancement and restoration, c) matching, description and recognition.

Deep Learning (DL), a new research direction in the field of Machine Learning (ML), is introduced to ML to bring it closer to its original goal - artificial intelligence. DL is a process of learning inherent laws and representation hierarchy of sample data, and information obtained from the learning process can be of great help in interpretation of data such as text, images and sounds. The ultimate goal is to enable machines to have analytical learning capabilities like humans, capable of recognizing data such as text, images and sounds. DL is a complex machine learning algorithm that has achieved results in speech and image recognition that far surpass the previous related art.

Computer vision is a science that studies how to make machines "see", which refers to using cameras and computers instead of human eyes to identify, track and measure targets and other machine visions, and further to performing graphics processing, so that the image after the computer processing becomes an image that is more suitable for human eyes' observation or transmission to the instrument for inspection. As a scientific discipline, the computer vision studies related theories and techniques to try to build artificial intelligence systems that can derive "information" from images or multidimensional data. Information refers to information defined by Shannon that can help make a "decision". Since perception can be seen as extracting information from sensory signals, computer vision can also be seen as a science that studies how to make artificial systems "perceive" images or multi-dimensional data.

Artificial Intelligence (AI) is a discipline that studies computers to simulate certain thinking processes and intelligent behaviors (such as learning, reasoning, thinking and planning) of human, which has both hardware-level technologies and software-level technologies. Artificial intelligence hardware technologies generally include computer vision technology, speech recognition technology, natural language processing technology, and its learning/deep learning, big data processing technology, knowledge map technology and other aspects.

Big data refers to a data set that cannot be captured, managed and processed with conventional software tools within a certain time period, which is a massive and diversified information asset having high rate of growth that requires a new processing model to have high decision-making power, insight and discovery, and process optimization capabilities.

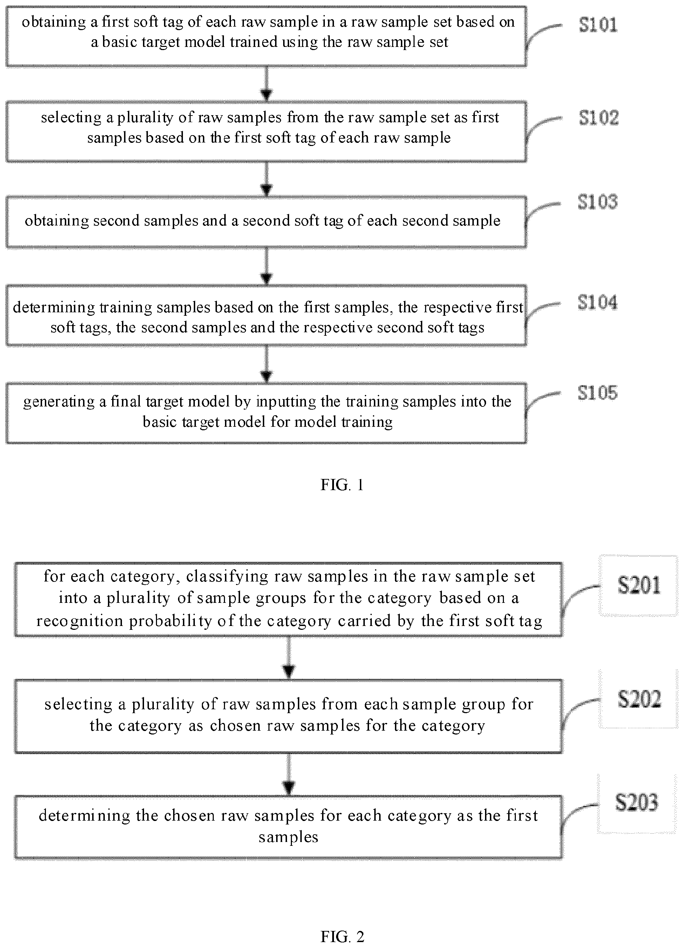

FIG. 1 is a flowchart of a method for incrementally training a model according to an embodiment of the disclosure. As illustrated in FIG. 1, the method for incrementally training the model includes the followings.

In S101, a first soft tag of each raw sample in a raw sample set is obtained based on a basic target model trained using the raw sample set.

A main application scenario of the embodiments of the disclosure is to optimize an existing model based on new added data, so that the basic target model can obtain new knowledge from the new added data while retaining old knowledge already learned from the raw sample set.

Alternatively, the existing model may be an existing online or offline model in use. Before optimization, the existing model to be optimized is used as the basic target model. The basic target model is obtained by training based on the raw samples in the raw sample set and corresponding pre-labeled tags.

In the embodiments of the disclosure, a soft tag can be labeled for each raw sample in the raw sample set based on the basic target model in an unsupervised manner. That is, each raw sample is input into the basic target model, the basic target model performs feature extraction on the raw sample, and outputs a recognition result for the raw sample based on the extracted features. The recognition result includes category confidences, that is, probability that the raw sample belongs to each category. In the embodiments of the disclosure, the recognition result is output as the soft tag corresponding to the raw sample. In the embodiments of the disclosure, the soft tag corresponding to each raw sample is referred to as the first soft tag.

A difference between the soft tag and the hard tag will be described below. In a training process of the machine learning model, it is necessary to label tags for each sample. In the implementation, the tags may include hard tags and soft tags. Taking a binary classification task as an example, "0" represents non-news events, and "1" represents news events, if a major traffic accident occurs on a highway at this time, the accident can be expressed as 1 with a hard tag and as (0.1, 0.9) with a soft tag.

It can be seen that hard tag is "either black or white". For example, in a binary classification sentiment analysis task, the hard tag labeled is either positive or negative, and there will be no tag that is both positive and negative. Compared with the hard tag, the soft tag saves more information, which is equivalent to adding a "gray area". The soft tag is a category probability vector composed of category confidences.

For example, a soft tag of a binary classification sentiment analysis model can be (positive, negative) = (0.3, 0.7), indicating that a probability ratio of positive sentiment to negative sentiment is 3:7. A soft tag of a triple classification sentiment analysis model can be (positive, neutral, negative) = (0.1, 0.3, 0.6), which means that a probability ratio of positive sentiment, neutral sentiment and negative sentiment is 1:3:6.

In S102, a plurality of raw samples are selected from the raw sample set as first samples based on the first soft tag of each raw sample.

In the embodiments of the disclosure, in order to retain the capability of the existing model to learn old knowledge from the previous raw sample set, some raw samples may be selected from the raw sample set.

When selecting some raw samples, the first soft tag of each raw sample is used as a screening indication, that is, the raw samples in the raw sample set are divided according to a recognition probability of each category in the raw sample set, and the selected raw samples are taken as the first samples. For a sample, the recognition probability of a category refers to a possibility that the sample belongs to the category. A soft tag of the sample may carry the recognition probability of each category. For example, a soft tag of a triple classification sentiment analysis model can be (positive, neutral, negative) = (0.1, 0.3, 0.6), which means that the recognition probability of the sentiment positive category is 0.1, the recognition probability of the sentiment neutral category is 0.3, and the recognition probability of the sentiment negative category is 0.6. It is understandable that, in order to ensure universality of the model, a category distribution of the selected raw samples needs to be consistent with a category distribution of the raw sample set. That is, stratified sampling is performed on the raw samples in the raw sample set, some raw samples are selected from the raw sample set for each category, according to the first soft tag of each raw sample. In order to achieve a high recognition accuracy for each category, it is required to ensure that the samples for each category are relatively balanced. Therefore, the number of the raw samples selected for each category is the same or slightly different from each other.

In S103, second samples and a second soft tag of each second sample are obtained.

New added data is obtained as the second sample. The second sample may be a collected sample that is incorrectly classified in the basic target model, or may be a newly generated sample subsequently. For example, the basic target model is a model used for image recognition, and the new added second sample may be a subsequently acquired image sample. For another example, the basic target model is a model used for speech recognition, and the new added second sample may be a subsequently acquired speech sample.

To be consistent with the tags of the raw samples in the raw sample set, in the embodiments of the disclosure, each second sample has its own soft tag, and the soft tag of each second sample is called the second soft tag. Alternatively, the second soft tag may be directly labeled in advance.

Taking the triple classification sentiment analysis model as an example, alternatively, a piece of positive sentiment text can be directly labeled with a soft tag (1.0, 0.0, 0.0).

In S104, training samples are determined based on the first samples, the respective first soft tags, the second samples and the respective second soft tags are.

In the embodiments of the disclosure, some raw samples are selected from the raw sample set and combined with the new added data to train the basic target model. The first sample and the respective first soft tag, and the second sample and the respective second soft tag are combined as the training sample.

In S105, a final target model is generated by inputting the training samples into the basic target model for model training.

The first sample, the respective first soft tag, the second tag and the respective second soft tag are input into the basic target model, parameters of the basic target model are fine-tuned, the trained basic target model is obtained after multiple parameter adjustments and the trained basic target model is used as the target model.

In the method for incrementally training the model in the disclosure, the first soft tag of each raw sample in the raw sample set is obtained based on the basic target model trained using the raw sample set. A plurality of raw samples are selected from the raw sample set as first samples based on the first soft tag of each raw sample. Second samples and a second soft tag of each second sample are obtained. The first samples, the respective first soft tags, the second samples and the respective second soft tags are determined as training samples. A final target model is generated by inputting the training samples into the basic target model for model training. In the disclosure, based on the new added data, it is not necessary to combine all the raw samples in the raw sample set and the new added data to train the basic target model. Instead, some of the raw samples are selected from the raw sample set and combined with the new added data, to fine-tune and train the basic target model, so that the finally acquired model can retain the old knowledge learned from the raw sample set while acquiring the new knowledge from the new added data, thereby achieving a good balance of the plasticity and stability of the model and greatly improving the iterative update efficiency of the model.

FIG. 2 is a flowchart of the method for incrementally training the model according to the disclosure. On the basis of the above embodiments, based on the first soft tag, some of the raw samples are selected from the raw sample set as the first samples. As illustrated in FIG. 2, the method includes the followings.

In S201, for each category, raw samples in the raw sample set are classified into a plurality of sample groups for the category based on a recognition probability of the category carried by the first soft tag.

The information carried by the soft tag includes how many and which categories relate to the raw sample set. Taking the triple classification sentiment analysis model as an example, there are three categories, namely positive sentiment, neutral sentiment and negative sentiment. When some of the raw samples are selected, since a value range of a category confidence of each category is between 0 and 1, in the embodiments of the disclosure, 10 sample groups are determined for each category based on the category confidence, and the step size of each sample group is 0.1. Taking the positive sentiment as an example, the raw samples with the positive sentiment value of [0.0, 0.1) in the raw sample set are classified into a sample group, and so on, raw samples of the positive sentiment values of [0.1, 0.2), [0.2,0.3), [0.3,0.4), [0.4,0.5), [0.5,0.6), [0.6,0.7), [0.7,0.8), [0.8,0.9) [0.9,1.0] of the raw sample set are grouped separately, and a total of 10 sample groups are obtained. The method of classifying the neutral sentiment samples and the negative sentiment samples into 10 sample groups is the same as the method of classifying positive sentiment samples into sample groups, which will not be repeated here.

It should be noted that when the raw samples are classified, only the soft tag value corresponding to the category is checked in the soft tags. For example, if the soft tag of a sample is (0.1, 0.5, 0.4). When classifying, in the positive sentiment category, the sample belongs to the sample group [0.1,0.2). In the neutral sentiment category, the sample belongs to the sample group of [0.5,0.6); in the negative sentiment category, this sample belongs to the sample group [0.4,0.5).

In S202, a plurality of raw samples are selected from each sample group as chosen raw samples.

According to the probability that the sample belongs to each category indicated by the first soft tag, stratified sampling is performed on the raw sample set for each category. Taking the above triple classification sentiment analysis model as an example, the triple classification sentiment analysis model corresponds to three categories, and the first soft tag of each raw sample includes the category confidences of the three categories. Each category can correspond to several sample groups. For any category, a plurality of raw samples are selected from each sample group as the chosen raw samples corresponding to the category. In order to ensure universality of the model, the category distribution of selected raw samples needs to be consistent with the category distribution of the raw sample set.

In the embodiments of the disclosure, in order to ensure that a good balance is maintained between the plasticity and stability of the model, the number of the second samples is obtained, and based on sample data of the second samples, the number of the chosen raw samples is determined. Alternatively, the number of the chosen raw samples is configured to be any multiple of the number of the second samples. For example, the number of the chosen raw samples may be 1-2 times the number of the second samples. If the number of the first samples is configured to be the same as the number of the second samples in advance, the number of the chosen raw samples is set to be 1 time the number of the second samples. If the number of the second samples is 300, that is, the number of the chosen raw samples is also 300, i.e. 100 raw samples need to be extracted for each category. The chosen raw samples are selected from the three sample groups based on the category. Taking the category as positive sentiment as an example, samples are randomly selected from 10 sample groups. At the time of extraction, the ratio of the number of raw samples extracted from each sample group to the number of raw samples that need to be extracted for the category is consistent with the ratio of the number of raw samples in the sample group to the number of raw samples in the raw sample set. It should be noted that the setting of multiples as an example here is only for explaining this embodiment, which cannot be used as a condition for limiting the disclosure.

The method for selecting raw samples from the 10 sample groups for neutral sentiment and negative sentiment is consistent with the method for selecting some raw samples from the 10 sample groups for positive sentiment, which will not be repeated here.

In S203, the chosen raw samples for each category are determined as the first samples.

The chosen raw samples for each category are combined as the first samples. Taking the above triple classification sentiment analysis model as an example, 100 chosen raw samples for positive sentiment, 100 chosen raw samples for neutral sentiment, and 100 chosen raw samples for negative sentiment are added up to a total of 300 raw samples as the first samples.

In the embodiments of the disclosure, samples for optimizing the basic target model include some chosen raw samples from the raw sample set, which can retain the old knowledge that has been learned from the previous raw sample set, and reduce the oblivion of the old knowledge by the target basic model. Furthermore, the category distribution of the chosen raw samples is consistent with the category distribution of the raw sample set, which can ensure that the optimized target model has the same recognition effect for each category, and can avoid a phenomenon that a certain category has high recognition accuracy and a certain category has low recognition accuracy.

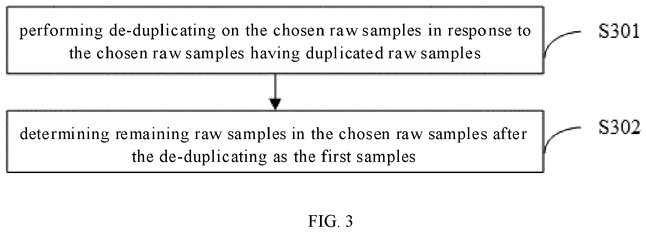

FIG. 3 is a flowchart of a method for incrementally training a model according to the disclosure. On the basis of the above embodiments, the chosen raw samples for each category are used as the first samples, as shown in FIG. 3, the method includes the followings.

In S301, de-duplicating is performed on the chosen raw samples in response to the chosen raw samples having duplicated raw samples.

Since in the embodiments of the disclosure, stratified sampling is performed on all the raw samples in the raw sample set for each category to obtain the chosen raw samples, there is a possibility that the chosen raw samples have duplicated raw samples. Duplicate checking is performed on the chosen raw samples, if the chosen raw samples have duplicated raw samples, de-duplicating is performed on the chosen raw samples to remove the duplicated raw samples. Taking the above triple classification sentiment analysis model as an example, a total of 300 chosen raw samples are selected, duplicate checking is performed on the 300 chosen raw samples. If a certain raw sample appears more than 2 times, the duplicated raw samples are removed, in order to only retain 1 raw sample of the duplicated raw samples.

In S302, remaining raw samples in the chosen raw samples after the de-duplicating are determined as the first samples.

After de-duplication of the chosen raw samples, the remaining chosen raw samples are determined as the first samples. Taking the above triple classification sentiment analysis model as an example, if 2 of the 300 chosen raw samples appear twice, and the remaining 296 chosen raw samples are not repeated, the duplicated raw samples are removed respectively for the 2 raw samples, and the remaining 2 raw samples are added to 296 chosen raw samples that are not repeated to obtain a total of 298 chosen raw samples, as the first samples.

Alternatively, the de-duplication of the chosen raw samples removes the duplicated raw samples. In this case, the number of the first samples is decreased. According to the de-duplicated chosen raw samples, the sample group for the category to which the de-duplicated chosen raw sample belongs during sample extracting is obtained, and a different raw sample are re-selected from the sample group for the category, as a replacement raw sample. The remaining chosen raw samples after de-duplication is supplemented by the replacement raw samples, and all the samples after supplementation are determined as the first samples. Taking the above triple classification sentiment analysis model as an example, if the repeated 2 chosen raw samples belong to a sample group having positive sentiment value of [0.2, 0.3) and a sample groups having neutral sentiment value of [0.7, 0.8) respectively, then in the two groups, a raw sample that is different from the repeated 2 chosen raw samples is selected from each of the two groups, the 2 newly chosen raw samples, 2 de-duplicated chosen raw samples and 296 non-repetitive chosen raw samples are combined together to obtain a total of 300 chosen raw samples as the first samples.

De-duplicating is performed on the chosen raw samples, and different raw samples are reselected to supplement the chosen raw samples, which can avoid a deviation caused by repeated samples during the training of the target basic model, and improve the recognition accuracy of the target basic model.

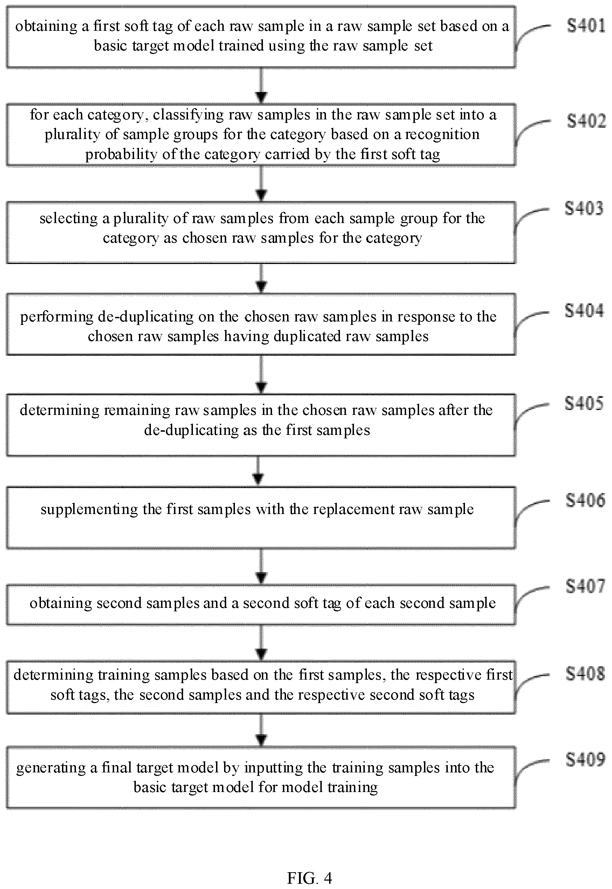

FIG. 4 is a flowchart of a method for incrementally training a model according to an embodiment of the disclosure. As illustrated in FIG. 4, the method includes the followings.

In S401, a first soft tag of each raw sample in a raw sample set is obtained based on a basic target model trained using the raw sample set.

In S402, for each category, raw samples in the raw sample set are classified into a plurality of sample groups for the category based on a recognition probability of the category carried by the first soft tag.

In S403, a plurality of raw samples are determined from each sample group for the category as chosen raw samples for the category.

In S404, de-duplicating is performed on the chosen raw samples in response to the chosen raw samples having duplicated raw samples.

In S405, a sample group to which a de-duplicated raw sample belongs is obtained, and a different raw sample is selected from the sample group as a replacement raw sample.

In S406, the first samples are supplemented with the replacement raw sample.

The specific introduction of the foregoing S402 to S406, refers to the description of the related content of the step S102 in the foregoing embodiments, which will not be repeated here.

In S407, second samples and a second soft tag of each second sample are obtained.

Alternatively, the added second samples are pre-labeled with hard tags, and the hard tags of the second samples need to be converted into soft tags. After the hard tags of the second samples are converted to the soft tags, the soft tags of the second samples are determined as the second soft tags. For example, if a hard tag is labeled for positive emotion text, the hard tag is 1, which can be converted to a soft tag (1.0, 0.0, 0.0).

In S408, the first samples, the respective first soft tags, the second samples and the respective second soft tags are determined as training samples.

In S409, a final target model is generated by inputting the training samples into the basic target model for model training.

In the method for incrementally training the model in the disclosure, the first soft tag of each raw sample in the raw sample set is obtained based on the basic target model trained using the raw sample set. A plurality of raw samples are selected from the raw sample set as first samples based on the first soft tag of each raw sample. Second samples and a second soft tag of each second sample are obtained. The first samples, the respective first soft tags, the second samples and the respective second soft tags are determined as training samples. A final target model is generated by inputting the training samples into the basic target model for model training. In the disclosure, based on the new added data, it is not necessary to combine all the raw samples in the raw sample set and the new added data to train the basic target model. Instead, some of the raw samples are selected from the raw sample set and combined with the new added data, to fine-tune and train the basic target model, so that the finally acquired model can retain the old knowledge learned from the raw sample set while acquiring the new knowledge from the new added data, thereby achieving a good balance of the plasticity and stability of the model and greatly improving the iterative update efficiency of the model.

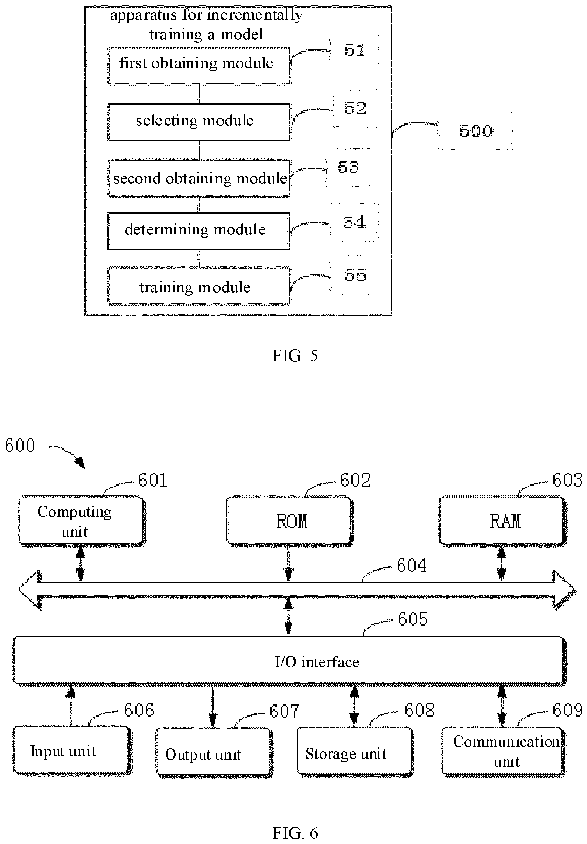

FIG. 5 is a block diagram of an apparatus 500 for incrementally training a model according to an embodiment of the disclosure. As illustrated in FIG. 5, the apparatus 500 includes: a first obtaining module 51, a selecting module 52, a second obtaining module 53, a determining module 54 and a training module 55.

The first obtaining module 51 is configured to obtain a first soft tag of each raw sample in a raw sample set based on a basic target model trained using the raw sample set.

The selecting module 52 is configured to select a plurality of raw samples from the raw sample set as first samples based on the first soft tag of each raw sample.

The second obtaining module 53 is configured to obtain second samples and a second soft tag of each second sample.

The determining module 54 is configured to determine training samples based on the first samples, the respective first soft tags, the second samples and the respective second soft tags.

The training module 55 is configured to generate a final target model by inputting the training samples into the basic target model for model training.

It is noted that the foregoing explanatory description of the embodiments of the method for incrementally training a model also applies to the apparatus for incrementally training a model of this embodiment, which is not repeated here.

The apparatus for incrementally training a model according to the disclosure, a first soft tag of each raw sample in a raw sample set is obtained based on a basic target model trained using the raw sample set. A plurality of raw samples are selected from the raw sample set as first samples based on the first soft tag of each raw sample. Second samples and a second soft tag of each second sample are obtained. The first samples, the respective first soft tags, the second samples and the respective second soft tags are determined as training samples. A final target model is generated by inputting the training samples into the basic target model for model training. In the disclosure, based on the new added data, it is not necessary to combine all the raw samples in the raw sample set and the new added data to train the basic target model. Instead, some of the raw samples are selected from the raw sample set and combined with the new added data, to fine-tune and train the basic target model, so that the finally acquired model can retain the old knowledge learned from the raw sample set while acquiring the new knowledge from the new added data, thereby achieving a good balance of the plasticity and stability of the model and greatly improving the iterative update efficiency of the model.

Further, in a possible implementation of an embodiment of the disclosure, the selecting module 52 is configured to: classify raw samples for a category in the raw sample set into a plurality of sample groups for the category based on a recognition probability of the category carried by the first soft tag; select a plurality of raw samples from each sample group for the category as chosen raw samples for the category; and determine the chosen raw samples for each category as the first samples.

Further, in a possible implementation of an embodiment of the disclosure, the selecting module 52 is configured to: perform de-duplicating on the chosen raw samples in response to the chosen raw samples having duplicated raw samples; and determine remaining raw samples in the chosen raw samples after the de-duplicating as the first samples.

Further, in a possible implementation of an embodiment of the disclosure, the selecting module 52 is configured to: obtain a sample group to which a de-duplicated raw sample belongs; select a different raw sample from the sample group as a replacement raw sample; and supplement the first samples with the replacement raw sample.

Further, in a possible implementation of an embodiment of the disclosure, the selecting module 52 is configured to: obtain a number of the second samples; and select the first samples from the raw sample set based on the number.

Further, in a possible implementation of an embodiment of the disclosure, the second obtaining module 53 is further configured to: obtain a hard tag of each second sample; and convert the hard tag to the second soft tag.

According to the embodiments of the disclosure, the disclosure also provides an electronic device, a readable storage medium and a computer program product.

FIG. 6 is a block diagram of an electronic device 600 configured to implement the method according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the device 600 includes a computing unit 601 performing various appropriate actions and processes based on computer programs stored in a read-only memory (ROM) 602 or computer programs loaded from the storage unit 608 to a random access memory (RAM) 603. In the RAM 603, various programs and data required for the operation of the device 600 are stored. The computing unit 601, the ROM 602, and the RAM 603 are connected to each other through a bus 604. An input/output (I/O) interface 605 is also connected to the bus 604.

Components in the device 600 are connected to the I/O interface 605, including: an inputting unit 606, such as a keyboard, a mouse; an outputting unit 607, such as various types of displays, speakers; a storage unit 608, such as a disk, an optical disk; and a communication unit 609, such as network cards, modems, wireless communication transceivers, and the like. The communication unit 609 allows the device 600 to exchange information/data with other devices through a computer network such as the Internet and/or various telecommunication networks.

The computing unit 601 may be various general-purpose and/or dedicated processing components with processing and computing capabilities. Some examples of computing unit 601 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 601 executes the various methods and processes described above. For example, in some embodiments, the method XXX may be implemented as a computer software program, which is tangibly contained in a machine-readable medium, such as the storage unit 608. In some embodiments, part or all of the computer program may be loaded and/or installed on the device 600 via the ROM 602 and/or the communication unit 609. When the computer program is loaded on the RAM 603 and executed by the computing unit 601, one or more steps of the method XXX described above may be executed. Alternatively, in other embodiments, the computing unit 601 may be configured to perform the method XXX in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve defects such as difficult management and weak business scalability in the traditional physical host and Virtual Private Server (VPS) service. The server may also be a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A method for incrementally training a model, comprising:
obtaining (S101, S401) a first soft tag of each raw sample in a raw sample set based on a basic target model trained using the raw sample set;
selecting (S102) a plurality of raw samples from the raw sample set as first samples based on the first soft tag of each raw sample;
obtaining (S103, S407) second samples and a second soft tag of each second sample;
determining (S104, S408) training samples based on the first samples, the respective first soft tags, the second samples and the respective second soft tags; and
generating (S105, S409) a final target model by inputting the training samples into the basic target model for model training.

2. The method of claim 1, wherein selecting (S102) the plurality of raw samples from the raw sample set as the first samples based on the first soft tag of each raw sample, comprises:
for each category, classifying (S201, S402) raw samples in the raw sample set into a plurality of sample groups for the category based on a recognition probability of the category carried by the first soft tag;
selecting (S202, S403) a plurality of raw samples from each sample group for the category as chosen raw samples for the category; and
determining (S203) the chosen raw samples for each category as the first samples.

3. The method of claim 2, wherein determining (S203, S403) the chosen raw samples for each category as the first samples comprises:
performing (S301, S404) de-duplicating on the chosen raw samples in response to the chosen raw samples having duplicated raw samples; and
determining (S302, S405) remaining raw samples in the chosen raw samples after the de-duplicating as the first samples.

4. The method of claim 3, further comprising:
obtaining a sample group to which a de-duplicated raw sample belongs;
selecting a different raw sample from the sample group as a replacement raw sample; and
supplementing (S406) the first samples with the replacement raw sample.

5. The method of any one of claims 1-4, further comprising:
obtaining a number of the second samples; and
wherein selecting the plurality of raw samples from the raw sample set as the first samples based on the first soft tag of each raw sample comprises:
selecting the plurality of raw samples from the raw sample set as the first samples based on the first soft tag of each raw sample and the number.

6. The method of any one of claims 1-4, further comprising:
obtaining a hard tag of each second sample; and
wherein obtaining the second soft tag of each second sample comprises:
converting the hard tag of each second sample to the second soft tag.

7. An apparatus (500) for incrementally training a model, comprising:
a first obtaining module (51), configured to obtain a first soft tag of each raw sample in a raw sample set based on a basic target model trained using the raw sample set;
a selecting module (52), configured to select a plurality of raw samples from the raw sample set as first samples based on the first soft tag of each raw sample;
a second obtaining module (53), configured to obtain second samples and a second soft tag of each second sample;
a determining module (54), configured to determine training samples based on the first samples, the respective first soft tags, the second samples and the respective second soft tags; and
a training module (55), configured to generate a final target model by inputting the training samples into the basic target model for model training.

8. The apparatus of claim 7, wherein the selecting module (52) is further configured to:
for each category, classify raw samples in the raw sample set into a plurality of sample groups for the category based on a recognition probability of the category carried by the first soft tag;
select a plurality of raw samples from each sample group for the category as chosen raw samples for the category; and
determine the chosen raw samples for each category as the first samples.

9. The apparatus of claim 8, wherein the selecting module (52) is further configured to:
perform de-duplicating on the chosen raw samples in response to the chosen raw samples having duplicated raw samples; and
determine remaining raw samples in the chosen raw samples after the de-duplicating as the first samples.

10. The apparatus of claim 9, wherein the selecting module (52) is further configured to:
obtain a sample group to which a de-duplicated raw sample belongs;
select a different raw sample from the sample group as a replacement raw sample; and
supplement the first samples with the replacement raw sample.

11. The apparatus of any one of claims 7-10, wherein the selecting module (52) is further configured to:
obtain a number of the second samples; and
select the first samples from the raw sample set based on the number.

12. The apparatus of any one of claims 7-10, wherein the second obtaining module (53) is further configured to:
obtain a hard tag of each second sample; and
convert the hard tag to the second soft tag.

13. An electronic device, comprising:
at least one processor; and
a memory communicatively connected with the at least one processor; wherein,
the memory stores instructions executable by the at least one processor, and when the instructions are executed by the at least one processor, the at least one processor is caused to execute the method according to any one of claims 1 to 6.

14. A non-transitory computer-readable storage medium storing computer instructions, wherein the computer instructions are used to make the computer execute the method according to any one of claims 1-6.

15. A computer program product comprising a computer program, wherein when the computer program is executed by a processor, the method according to any one of claims 1-6 is implemented.
